# FASCICULE DE BREVET EUROPEEN

(11) **EP 3 500 533 B1**
(45) Date de publication et mention de la délivrance du brevet: **30.11.2022**
(21) Numéro de dépôt: 17755183.5
(22) Date de dépôt: 22.08.2017
(51) Int. Cl.: C02F 3/30, C02F 11/04, C02F 101/10

(54) **PROCÉDÉ ET INSTALLATION POUR RÉCUPÉRER DU PHOSPHORE SUR UNE STATION D'ÉPURATION AVEC TRAITEMENT AVANCE DES BOUES**
VERFAHREN UND ANLAGE ZUR RÜCKGEWINNUNG VON PHOSPHOR IN EINER ABWASSERBEHANDLUNGSANLAGE MIT ERWEITERTER SCHLAMMBEHANDLUNG
PROCESS AND FACILITY FOR RECOVERING PHOSPHORUS AT A WASTEWATER TREATMENT PLANT WITH ADVANCED SLUDGE TREATMENT

(30) Priorité: 22.08.2016 FR 1657847
(43) Date de publication de la demande: 26.06.2019
(73) Titulaire: Suez International, 92040 Paris la Défense Cedex (FR)
(72) Inventeur: DELAHAYE, Mathieu, 78350 Jouy en Josas (FR)
(74) Mandataire: IPAZ
(86) Numéro de dépôt international: PCT/EP2017/071076
(87) Numéro de publication internationale: WO 2018/036987

(56) Documents cités:
- EP-A1- 3 018 105
- FR-A1- 2 942 792
- US-A1- 2012 152 812
- US-A1- 2013 134 089
- US-A1- 2014 374 348
- US-A1- 2016 023 935

## Description

La présente invention se rapporte à un procédé pour récupérer du phosphore présent dans un effluent à traiter ainsi qu'une installation apte à mettre en œuvre ledit procédé.

A l'heure où l'on cherche à préserver par tous les moyens les ressources minérales, dont les cours connaissent une forte croissance et où la population est sensibilisée par la qualité de son environnement, la récupération du phosphore lors du traitement des eaux usées sur une station d'épuration est particulièrement importante.

Le phosphore est une ressource épuisable pour laquelle il n'y a pas, à l'heure actuelle, de solution de remplacement. Il est indispensable à la vie humaine, notre corps en continent environ 800 grammes, c'est le second minéral le plus présent dans le corps après le calcium. On trouve du phosphore dans chaque cellule, et il joue un rôle central dans le métabolisme humain, dans notre système nerveux et dans la bonne santé du squelette. Il est également vital pour les plantes puisqu'il les aide à convertir les nutriments en éléments de croissance.

Environ 90 % du minerai extrait du sol sont utilisés comme ingrédient incontournable dans les engrais. Avec la population mondiale qui devrait atteindre 9 milliards de personnes en 2050, nous devons assurer un approvisionnement suffisant en engrais phosphorés pour les cultures alimentaires.

Or, alors que l'agriculture a besoin de phosphore, les opérateurs de stations d'épuration doivent l'éliminer pour éviter l'euphorisation des systèmes d'eau douce. En outre, la présence d'un excès de nutriments dans un cours d'eau entraîne une croissance végétale trop abondante, en particulier au niveau des algues. Il en résulte que les bactéries consomment quasiment tout l'oxygène présent dans l'eau, étouffant ainsi les poissons et la faune aquatique.

Le processus d'élimination comporte son lot de problèmes : les phosphates, les sels contenant le phosphore, se combinent avec le magnésium et l'ammoniaque pour former des struvites. Cette dernière est une substance qui bouche les canalisations, les pompes et autres équipements, perturbant ainsi la production et entraînant d'importantes dépenses de maintenance.

Depuis de nombreuses années des techniques de traitement des eaux usées ont été développées et mises en œuvre dans le but de rejeter dans le milieu naturel des eaux usées assainies, c'est-à-dire pour lesquelles la pollution, notamment particulaire, carbonée, azotée et phosphorée, est réduite.

Actuellement, le traitement du phosphore sur une station d'épuration est effectué de deux manières qui peuvent être complémentaires :
- par voie physico-chimique via l'ajout d'un sel métallique, comme par exemple le chlorure ferrique ; cela entraîne la précipitation du phosphore qui est alors extrait de la filière de traitement des eaux par un séparateur, le phosphore étant retenu dans les boues issues de la séparation ; la récupération du phosphore peut être effectuée de différentes manières mais la plus répandue est la méthode de précipitation/cristallisation sous forme minérale du phosphore telle que la struvite ou l'apatite.
- par voie biologique via la suraccumulation du phosphore dans les boues au travers de la mise en place d'une déphosphatation biologique dont le principe consiste à incorporer le phosphore initialement présent dans l'eau brute dans la biomasse cellulaire puis à l'évacuer avec les boues en excès.

La déphosphatation biologique est réalisée par la succession d'une étape de traitement en anaérobie et d'une étape de traitement en aérobie avec recirculation des boues entre ces deux étapes.

En effet, certaines bactéries (Polyphoshate-Accumulating Organisms ou PAO) ont la caractéristique intéressante de concentrer le phosphore sous forme de granules de polyphosphates lorsqu'elles sont soumises à des alternances de conditions anaérobie et aérobie. Les PAO relarguent des phosphates pendant leur séjour en conditions anaérobie et en passant ensuite en conditions aérobie ils accumulent une quantité de phosphates supérieure à celle relarguée en conditions anaérobie.

Par conséquent, en extrayant ces bactéries sous forme de boues de l'effluent, la concentration de phosphates dans l'effluent est diminuée.

Lorsque l'on souhaite récupérer le phosphore dans les boues issues des eaux usées, il est nécessaire de disposer d'un effluent suffisamment concentré en phosphore, ce qui est le cas notamment lorsque les bactéries PAO se retrouvent en conditions anaérobie (par exemple lors du traitement en digestion anaérobie des boues) et qu'elles relarguent le phosphore préalablement suraccumulé.

Ainsi, lorsque les boues en excès obtenues après déphosphatation biologique sont en conditions anaérobie, l'effluent issu de celle-ci devient chargé en phosphore soluble et la récupération peut alors être effectuée via la précipitation du phosphore sous forme minérale par ajout d'ions comme le magnésium, le potassium ou le calcium en fonction de la forme minérale souhaitée.

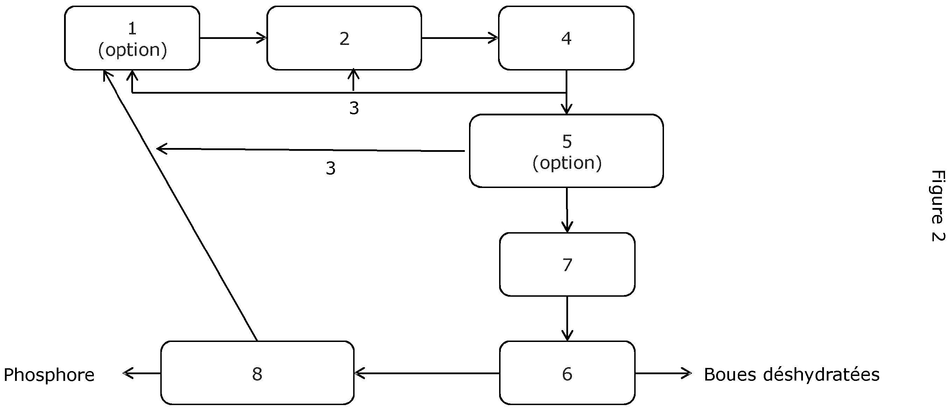

Une filière conventionnelle qui permet de récupérer le phosphore telle que celle qui est illustrée à la figure 2 permet la récupération du phosphore grâce à la présence d'une succession de zones anaérobie et aérobie (avec recirculation des boues) permettant la suraccumulation du phosphore par les PAO et, grâce à la digestion anaérobie, le relargage du phosphore qui ressort en forte concentration de la digestion anaérobie. Bien que cette filière de traitement permette de récupérer environ 90% du phosphore contenu dans les centrats, cela ne représente que 10% à 15% du phosphore total entrant sur la station d'épuration. En effet une grosse partie du phosphore reste piégée dans les boues déshydratées.

Les procédés conventionnels de récupération du phosphore se font par le biais de la précipitation/cristallisation sur les centrats ou digestats de station d'épuration et présentent les inconvénients suivants :
- le taux de récupération moyen du phosphore est relativement faible par rapport à la quantité entrante sur la station d'épuration : le taux de récupération moyen du phosphore est de l'ordre de 10% à 15% ;
- les opérations de maintenance sont fréquentes et coûteuses car la récupération du phosphore a généralement lieu après la digestion des boues, ce qui ne prévient pas la précipitation du phosphore dans les digesteurs, cause d'« entartrage » du digesteur et donc de réduction du son volume utile et de celui des canalisations ;
- la nécessité d'une digestion anaérobie des boues, ce qui limite leur capacité d'application ; et
- le retour sur investissement est long du fait des relativement faibles concentrations en phosphore récupérées dans les effluents traités et pouvant être valorisées en engrais ou produits chimiques via la production de phosphore sous forme minérale.

Autrement dit, la récupération du phosphore est actuellement limitée par : un faible rendement de récupération global sur une station d'épuration, de l'ordre de 10% à 15 % de la quantité de phosphore entrant et la nécessité de disposer d'une digestion anaérobie ainsi qu'une déphosphatation biologique pour les stations d'épuration.

Certaines stations d'épuration sont équipées de traitement avancé des boues afin d'en réduire le volume ou de produire des sous-produits valorisables, tels que le biochar ou charbon à usage agricole, le biogaz, etc. Ces traitements avancés des boues sont souvent de type thermique (hydrolyse thermique, carbonisation hydrothermale, oxydation par voie humide) mais peuvent également être de type chimique, biologique, enzymatique ou le couplage de ces différents types de technologie. Ils produisent des effluents liquides très concentrés qui sont envoyés en tête de station - préférentiellement dans le réacteur anaérobie afin de fournir des acides gras volatils (AGV) pour l'élimination biologique du phosphore, ou en digestion anaérobie pour augmenter la production de biogaz, ou encore en aérobie pour les oxyder - ce qui augmente la charge à traiter sur les stations d'épuration, entraînant de nombreux surcoûts.

Les traitements avancés, notamment les traitements thermiques, entraînent souvent une augmentation de la production d'AGV dans l'effluent liquide issu de ces traitements.

Ces effluents sont concentrés en carbone, particulièrement en AGV, en azote, particulièrement sous forme d'ammoniaque, et en phosphore.

Par ailleurs, afin que l'élimination biologique du phosphore soit performante, les PAO doivent d'abord consommer une quantité importante d'AGV pour constituer un stock suffisant de polyhydroxyalcanoates (PHA) et relarguer les phosphates pendant leur séjour en conditions anaérobie.

Cependant, la quantité d'AGV disponible dans les eaux usées n'est généralement pas suffisante pour assurer une élimination optimale du phosphore et c'est pourquoi la déphosphatation biologique est généralement couplée à une déphosphatation physico-chimique. Toutefois ces techniques impliquent un coût important, augmentent la quantité de boues formées au cours du traitement des eaux et ont un impact environnemental négatif en terme d'empreinte carbone.

De nouvelles méthodes ont été décrites pour augmenter les concentrations en AGV afin d'améliorer l'abattement des phosphates par voie biologique. Par exemple dans la demande internationale WO2013110776 est décrite une méthode comprenant une étape de production d'AGV par un traitement par voie humide d'un effluent ayant subi au préalable un traitement biologique sous anoxie suivi d'un traitement en anaérobie ; une partie de ces AGV sont soumis à un traitement biologique sous anaérobie avant d'être renvoyée en tête de traitement biologique sous anoxie. Dans un mode de réalisation particulier du procédé, l'étape de traitement par voie humide est précédée d'une étape de digestion anaérobie éventuellement suivie d'une étape de séparation liquide/solide et d'une étape d'abattement ammoniacal elle-même précédée d'une étape de précipitation des phosphates qui sont traités par voie physico-chimique.

Cependant cette méthode, dans laquelle la recirculation est faite en tête du circuit, ne permet pas des taux de récupération de phosphore importants. Par ailleurs elle associe toujours un traitement biologique et un traitement chimique, ce qui la rend coûteuse et difficilement exploitable industriellement.

Dans la demande US2012/0152812, la méthode décrite comprend l'utilisation d'un réacteur anaérobie placé sur la recirculation des boues du clarificateur secondaire (décanteur) vers le traitement biologique. Cela a pour effet de réduire la production de boues et de fournir les AGV pour la déphosphatation biologique ou la dénitrification qui normalement nécessite des apports de carbone externes. L'amélioration de l'élimination du phosphore par assimilation de celui-ci par les organismes PAO en présence d'AGV n'est qu'un effet secondaire de cette méthode et le relargage du phosphore a lieu dans le bassin anaérobie sur la file eau.

La demande US2014/0374348 décrit une méthode de récupération du phosphore sur les boues réalisée entre une étape d'hydrolyse thermique et chimique des boues et une étape de digestion.

Cette hydrolyse thermique et chimique des boues a pour but non seulement de les rendre plus digestibles mais aussi de solubiliser le phosphore, ce qui réduit le risque de précipitation de phosphore dans le digesteur anaérobie. Le phosphore est récupéré sous forme de sels métalliques, notamment sous forme de sels d'ammonium/magnésium, l'ammonium pouvant être apporté par recirculation de la matière provenant de la digestion anaérobie.

Dans la mesure où la récupération du phosphore est faite sur une matrice de boues, cette méthode est peu performante en termes de rendements et de qualité de la struvite produite qui contient 20 à 30 % de matières organiques contre moins de 2% pour les struvites produites sur matrices liquides.

Par conséquent il existe toujours un besoin de disposer d'une méthode permettant de récupérer le phosphore à partir d'eaux usées qui soit simple à mettre en œuvre et permettant une bonne récupération globale du phosphore.

La présente invention a donc pour but de provoquer un relargage optimal du phosphore sur les boues extraites dans la file de traitement des boues.

Le procédé de récupération du phosphore présent dans un effluent à traiter selon l'invention comprend les étapes suivantes :
i. une étape de déphosphatation biologique de l'effluent à traiter, ladite étape comprenant :
   i.1. au moins une étape de traitement en conditions anaérobies, et
   i.2. au moins une étape de traitement en conditions aérobies ;
ii. une étape de séparation dudit effluent traité issu de l'étape i, notamment pour séparer l'eau traitée issue de l'étape i et les boues ;
iii. une étape d'hydrolyse anaérobie d'au moins une partie des boues issues de l'étape ii dans laquelle le phosphore est relargué;
iv. une étape de séparation liquide/solide des boues issues de l'étape iii ;
v. une étape de traitement avancé d'au moins une partie des boues issues de l'étape iv ; ledit traitement avancé étant choisi parmi les traitements thermiques, mécaniques, chimiques, enzymatiques ou une combinaison de ceux-ci ;
vi. une étape de recirculation au niveau de l'étape iii d'au moins une partie de l'effluent liquide issu de l'étape v ; correspondant au retour de l'effluent liquide issu de l'étape v au niveau de l'étape iii tandis que l'effluent solide reste au niveau du traitement avancé, ce dernier permettant le passage en phase liquide de fortes concentrations d'azote, de phosphore et d'AGV et
vii. une étape de récupération du phosphore présent dans l'effluent liquide issu de l'étape iv.

Conformément à la présente invention, l'étape de déphosphatation biologique de l'effluent i consiste en l'élimination du phosphore dudit effluent à l'aide de micro-organismes, et particulièrement ceux accumulant le phosphate (PAO). Cette étape peut être réalisée en un seul ou en deux réacteur(s) selon des techniques bien connues de l'Homme du métier.

En outre, l'étape de clarification ou de filtration ii peut être réalisée concomitamment ou postérieurement à l'étape de déphosphatation biologique i proprement dite afin de séparer l'eau traitée et les boues.

L'étape d'hydrolyse anaérobie iii est une étape au cours de laquelle des boues biologiques activées extraites de la ligne de traitement des eaux principale comprenant des PAO vont utiliser les fortes concentrations en AGV présentes dans les retours de traitement avancé pour produire des PHA pour relarguer le phosphore qu'ils avaient accumulé ou suraccumulé en aérobie. Notamment, les PAO peuvent provenir du réacteur aérobie et sont donc chargés en phosphates.

Autrement dit, les AGV sont transformés en PHA dans le réacteur d'hydrolyse, lequel permet le relargage du phosphore, lesdits PHA pouvant être dégradés par la suite dans une éventuelle digestion anaérobie.

La réaction de relargage du phosphore va être d'autant plus rapide que la concentration en AGV sera élevée.

Conformément à la présente invention, l'étape de séparation liquide/solide iv est une étape au cours de laquelle le mélange issu de l'étape iii est séparé en deux flux : un effluent liquide, et un effluent de type boues ; l'effluent liquide est chargé en phosphore et en azote tandis que l'effluent de type boues est très peu chargé de ces deux éléments. Elle peut être réalisée selon toute technique adéquate connue de l'Homme du métier, et en particulier cette étape de séparation liquide/solide peut être une déshydratation mécanique, une décantation, une clarification, une filtration, ...

Dans le cadre de la présente invention, les termes « effluents liquides » et « centrats » sont considérés comme synonymes.

Selon la présente invention, on entend par traitement avancé toute étape permettant d'obtenir des effluents chargés, choisi parmi les traitements thermiques, mécaniques, chimiques, enzymatiques ou une combinaison de ceux-ci.

Lorsqu'on utilise une étape de traitement thermique, celle-ci peut être mise en œuvre par toute technique adéquate connue de l'Homme du métier et permettant la production d'AGV, il peut en particulier s'agir de :
- procédés de conditionnement thermique tels que : le conditionnement thermique, la digestion anaérobie, ou une combinaison de ces procédés ;
- procédés d'oxydation de la matière organique tels que : l'oxydation en voie humide sous O₂ et sous pression, l'incinération dédiée avec ou sans préséchage, la pyrolyse, la thermolyse, la gazéification, l'ozonation ou l'ajout d'oxydant puissant comme le peroxyde d'hydrogène, ou une combinaison de ces procédés ;

- procédés de vitrification de la matière minérale tels que : le post-traitement des cendres par fusion, la gazéification avec vitrification intégrée, ou une combinaison de ces procédés ; ou
- une combinaison de ces différents types de procédés.

Conformément à la présente invention, l'étape de recirculation d'au moins une partie de l'effluent vi correspond au retour de l'effluent liquide issu de l'étape v au niveau de l'étape iii tandis que l'effluent solide reste au niveau du traitement avancé, ce dernier permettant le passage en phase liquide de fortes concentrations d'azote, de phosphore et d'AGV. Ainsi, le rendement et la vitesse de récupération du phosphore et de l'ammonium sont améliorés par cette étape du fait de la maximisation du relargage du phosphore.

De préférence, on entend par « au moins une partie » la recirculation entre 90% à 99 % en volume de l'effluent entrant sur le traitement avancé, et de manière encore plus préférée entre 93% et 96 % en volume de l'effluent entrant sur le traitement avancé.

Selon la présente invention, l'étape de récupération du phosphore vii peut être réalisée par tout traitement physico-chimique bien connu de l'Homme du métier permettant la précipitation du phosphore de telle sorte que le phosphore ainsi précipité soit extrait de la filière de traitement des eaux par un séparateur.

De préférence, la précipitation du phosphore se fait par ajout de magnésium pour obtenir de la struvite. Cependant l'Homme du métier saurait ajouter d'autres ions, tel que le calcium, pour précipiter le phosphore en un autre minerai phosphoré souhaité.

Le fait d'augmenter la récupération du phosphore sur la station d'épuration permet de réduire les quantités de sels métalliques utilisées pour la précipitation physico-chimique du phosphore, engendrant ainsi des économies d'exploitation et un meilleur bilan environnemental.

Cela permet également de réduire les consommations en air nécessaires au traitement de l'azote contenu dans les retours de traitement avancé.

D'autres avantages sauront être générés par l'Homme du métier comme l'augmentation de la siccité des boues déshydratées ou la réduction des doses de polymères utilisées pour la déshydratation des boues.

Les avantages principaux de l'invention sont : d'augmenter les taux de récupération du phosphore sur les stations d'épuration, et de réduire davantage les problèmes d'exploitation sur les stations d'épuration liées à la précipitation de phosphore sous forme minérale, par exemple sous forme de struvite.

Ce positionnement innovant permet de :
- s'affranchir de la digestion anaérobie pour récupérer le phosphore,
- d'améliorer le rendement et la vitesse de récupération du phosphore et de l'ammoniaque lors de l'étape de séparation liquide/solide iv du fait de l'utilisation du phosphore, de l'azote et des AGV obtenus lors des traitements avancés de boues,
- réduire les risques de précipitation en struvite dans les digesteurs et/ou les traitements boues situés en aval du réacteur d'hydrolyse des boues,
- augmenter le taux de récupération du phosphore sur les stations d'épuration tout en diminuant les besoins en réactif pour assurer la déphosphatation physico-chimique, les besoins en air pour traiter l'azote, ledit taux de récupération globale du phosphore sur l'ensemble de la station d'épuration étant d'au moins environ 30%, de préférence au moins égal à 40%, de manière préférée est compris entre 40% et 80%, et de manière encore plus préférée est compris entre 45% et 60%.

L'élimination du phosphore avant le traitement des boues permet également d'améliorer la déshydratabilité des boues.

Les effluents à traiter selon le procédé de l'invention peuvent être toutes eaux d'origine industrielle, notamment des effluents industriels, ou d'origine agricole, municipale ou domestique.

Selon un mode de réalisation particulier de l'invention, l'étape de récupération du phosphore vii peut être réalisée sur le même site que les étapes i à vi ou peut être effectuée sur un site différent moyennant le transport des effluents issus de l'étape iv.

Dans un mode de réalisation avantageux de l'invention, le procédé comprend en outre une étape de digestion anaérobie entre les étapes iv et v.

Dans le cadre la présente invention, les termes « digestion anaérobie » et « méthanisation » sont équivalents.

Conformément à la présente invention, l'étape de digestion anaérobie peut être réalisée par tout traitement permettant de réduire la masse des boues par une dégradation biologique anaérobie, celle-ci pouvant notamment se faire par fermentation, et peut être réalisée en une ou deux phase(s).

Lorsque l'étape de digestion anaérobie se fait en deux phases, elle consiste en une hydrolyse rapide des matières organiques puis en une optimisation de la fermentation méthanique.

Selon un autre mode de réalisation avantageux du procédé de l'invention, l'étape de digestion anaérobie peut être une étape de codigestion, c'est-à-dire qu'elle met en œuvre à la fois des boues issues de l'étape iv et des co-substrats pour assurer le maintien de l'alimentation en matière organique.

On entend par « co-substrat » tout déchet organique à fort pouvoir méthanogène, comme par exemple les invendus de supermarchés, les ordures ménagères fermentescibles, les graisses, le lisier...

Dans un mode de réalisation avantageux de l'invention, le procédé comprend en outre une étape de valorisation de biogaz après ladite étape de digestion anaérobie.

Dans le cadre de l'invention, l'étape de valorisation de biogaz peut être une valorisation de la chaleur, une cogénération, une injection dans le réseau de gaz naturel, une production de biocarburants, ou toute autre valorisation connue de l'Homme du métier.

Dans un mode de réalisation avantageux de l'invention, le liquide issu de l'étape vii est recirculé au niveau de l'étape i. Ainsi au moins une partie du liquide issu de l'étape vii est renvoyée au niveau de l'un et/ou l'autre des réacteurs de la déphosphatation biologique.

Dans un mode de réalisation avantageux de l'invention, et ce pour assurer un relargage optimal du phosphore, le temps de séjour dans l'unité d'hydrolyse anaérobie de l'effluent issu de l'étape ii est inférieur à 4h, de préférence compris entre 30min et 4h, de manière encore plus préférée compris entre 30min et 2h.

En outre, ce mode de réalisation avantageux de l'invention permet également la réduction de la taille du réacteur et de ce fait la réduction de la station d'épuration.

Dans un mode de réalisation avantageux de l'invention, le taux de récupération globale du phosphore est supérieur à environ 30% du phosphore total entrant, de préférence supérieur à environ 40% du phosphore total entrant.

Selon un autre aspect de l'invention, les effluents provenant du traitement avancé des boues v peuvent être soumis à une étape de récupération ou d'élimination de l'azote afin de réduire l'excès d'azote lors de la précipitation de la struvite et d'éviter également la recirculation de l'azote dans la file de traitement de l'eau, ce qui nécessiterait alors une dépense énergétique pour l'oxydation de l'azote.

Cette étape de récupération ou d'élimination, peut permettre d'ajuster au mieux le ratio azote/phosphore dans le réacteur de relargage du phosphore afin de limiter les retours d'azote dans la filière eau. Cette étape peut être réalisée préférentiellement par récupération de l'azote ou par élimination biologique via la nitrification/dénitrification, le shunt des nitrates, c'est-à-dire la dénitrification directe des nitrites accumulés en diazote gazeux, ou la déammonification par le biais de bactéries de type anammox, c'est-à-dire capables d'oxydation anaérobie de l'ammonium.

La présente invention a également pour objet une installation apte à récupérer le phosphore présent dans un effluent à traiter comprenant au moins un réacteur anaérobie, au moins un réacteur aérobie, un séparateur, dans lequel l'effluent issu du réacteur aérobie est séparé en eau traitée et boues, au moins un réacteur de relargage du phosphore, dans lequel sont traités par hydrolyse anaérobie des boues issues de la séparation par le séparateur, au moins un autre séparateur, dans lequel les boues issues du réacteur de relargage de phosphore sont soumises à une séparation liquide/solide, au moins une unité de récupération du phosphore dans laquelle passe l'effluent liquide issu dudit séparateur, au moins une unité de traitement avancé des boues, pour traiter au moins une partie des boues issues dudit séparateur, ladite unité de traitement avancé étant choisie parmi les unités de traitement thermique, mécanique, chimique, enzymatique ou une combinaison de celles-ci, et au moins un moyen de communication entre l'au moins une unité de traitement avancé et le réacteur de relargage du phosphore permettant la recirculation d'au moins une partie de l'effluent liquide issu de l'unité de traitement avancé vers le réacteur de relargage du phosphore tandis que l'effluent solide reste au niveau de l'unité de traitement avancé qui permet le passage en phase liquide de fortes concentrations d'azote, de phosphore et d'AGV.

Afin d'optimiser la récupération du phosphore, le réacteur anaérobie de l'invention peut recevoir les boues activées issues d'un traitement primaire d'un effluent, c'est-à-dire que le réacteur anaérobie peut être placé au niveau de l'extraction des boues.

Selon la présente invention, on entend par « réacteur de relargage du phosphore » tout dispositif où les PAO sont dans des conditions de relargage du phosphore, notamment dans des conditions anaérobie, en présence d'AGV, ou dans tout autre environnement connu de l'Homme du métier favorable.

Dans la présente invention, les termes « réacteur de relargage du phosphore », « réacteur d'hydrolyse du phosphore » sont considérés comme équivalents.

Au sens de la présente invention, une « unité de traitement avancé » est tout dispositif apte à détruire ou à transformer la matière organique des boues d'épuration permettant ainsi de réduire de façon considérable les quantités à évacuer. Dans le cas où ce traitement avancé est un traitement thermique, un tel dispositif pourrait être par exemple : un four rotatif, un four à grille, un four à étage ou un four à soles superposées, un four à lit fluidisé, une combinaison de ceux-ci, ou tout autre dispositif connu de l'Homme du métier et apte à mettre en œuvre notamment un procédé de thermolyse, d'hydrolyse thermique, de carbonisation hydrothermale ou d'oxydation par voie humide.

Conformément à la présente invention, « l'unité de récupération du phosphore » est un dispositif dans lequel un traitement physico-chimique bien connu de l'Homme du métier permet la précipitation du phosphore.

Le séparateur est nécessaire pour séparer l'eau traitée des boues produites, il peut faire partie intégrante de l'au moins un réacteur aérobie, voire de l'au moins un réacteur anaérobie. C'est le cas, en particulier, des réacteurs biologiques séquencés (Sequencing Batch Reactor).

Dans un mode de réalisation avantageux de l'invention, l'installation peut comprendre en outre au moins un moyen de communication entre l'au moins une unité de récupération du phosphore et l'au moins un réacteur anaérobie et/ou l'au moins un réacteur aérobie.

Dans un mode de réalisation avantageux de l'invention, l'installation peut comprendre en outre un digesteur anaérobie.

Conformément à la présente invention, on entend par « digesteur anaérobie » tout digesteur apte à dégrader la matière organique des boues produites afin de produire du biogaz, ledit digesteur pouvant être composé d'un ou deux réacteur(s).

Dans un mode de réalisation avantageux de l'invention, l'installation peut être couplée avec une installation pour la valorisation de biogaz.

L'hydrolyse des boues en anaérobie va générer des PHA, qui peuvent être favorablement transformés en biogaz dans un réacteur de digestion anaérobie.
Les figures 1 à 4 illustrent différentes filières conventionnelles et les figures 5 et 6 et l'exemple ci-après illustrent la présente invention sans pour autant s'y limiter.
La figure 1 représente une filière conventionnelle de traitement des eaux sans récupération du phosphore.
La figure 2 représente une filière conventionnelle de traitement des eaux avec récupération du phosphore par précipitation/cristallisation sur les centrats de déshydratation des boues digérées.
La figure 3 représente une filière conventionnelle de traitement des eaux dans laquelle il y a un traitement avancé des boues sans récupération du phosphore.
Les figures 4a et 4b représentent des filières conventionnelles avec traitement avancé des boues et récupération du phosphore sur les centrats de digestion anaérobie (Figure 4a) ou récupération du phosphore sur les retours de traitement avancé (Figure 4b).
La figure 5 représente une filière de traitement des eaux pour récupérer le phosphore avec digestion anaérobie selon un mode de réalisation de l'invention.
La figure 6 représente une filière de traitement des eaux pour récupérer le phosphore sans digestion anaérobie selon un autre mode de réalisation de l'invention.

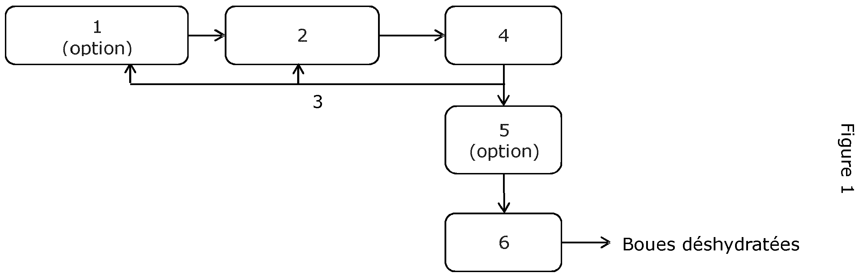

Dans les filières conventionnelles, illustrées dans les figures 1 à 4b, les eaux à traiter entrent dans un réacteur aérobie/anoxie et aérobie (2), celui-ci pouvant être précédé par un réacteur anaérobie (1). Les effluents issus de (2) sont ensuite séparés par un séparateur (4), à la suite duquel au moins une partie des boues sont recirculées (3) tandis que l'autre peut subir une séparation liquide/solide dans un séparateur (5). Une fois les effluents séparés et/ou épaissis, ils peuvent subir une déshydratation (6) et/ou digestion anaérobie (7) (figure 2). Certaines filières conventionnelles utilisent également un récupérateur de phosphore (8) en fin de traitement (figure 2).

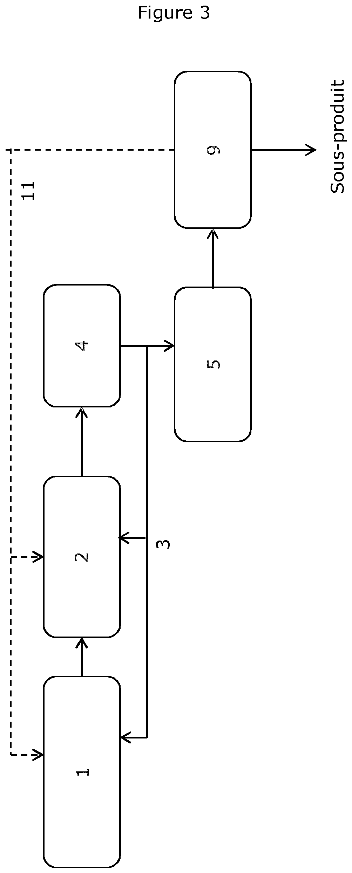

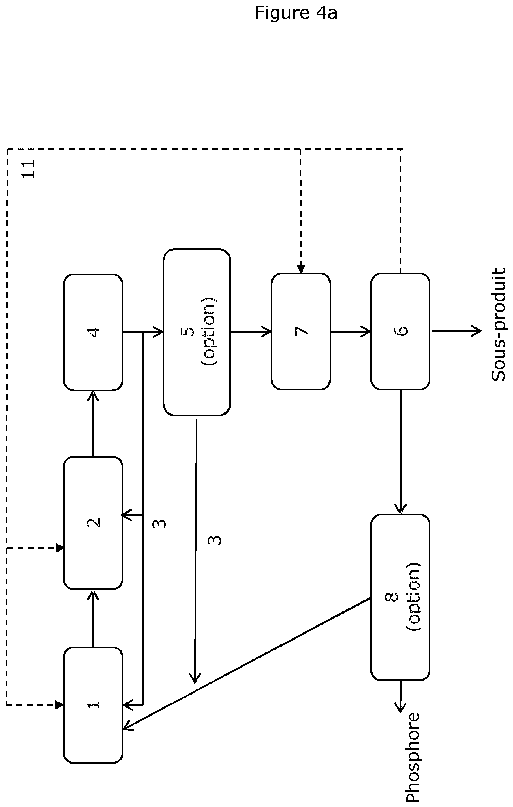

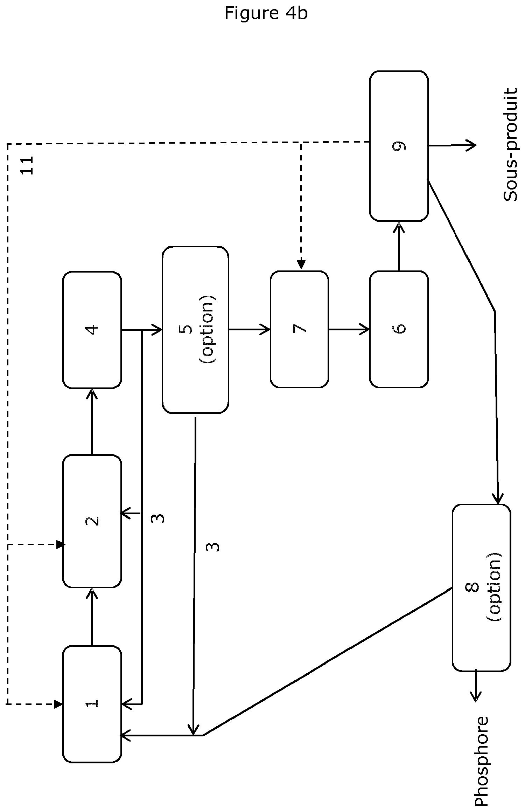

Les figures 3, 4a et 4b représentent des filières conventionnelles possédant en outre une unité de traitement avancé (9) à partir de laquelle les retours liquides de traitement avancé, ou centrats (11), sont renvoyés en tête de traitement, de préférence :
- dans le réacteur anaérobie (1) afin de fournir des AGV pour l'élimination biologique du phosphore ;
- dans le digesteur anaérobie (7) pour augmenter la production de biogaz ; ou
- dans le réacteur aérobie (2) pour oxyder les AGV.

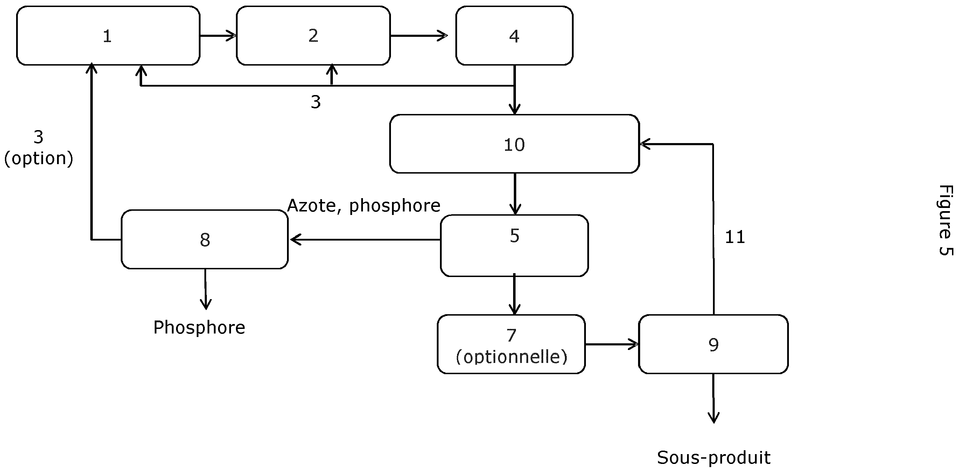

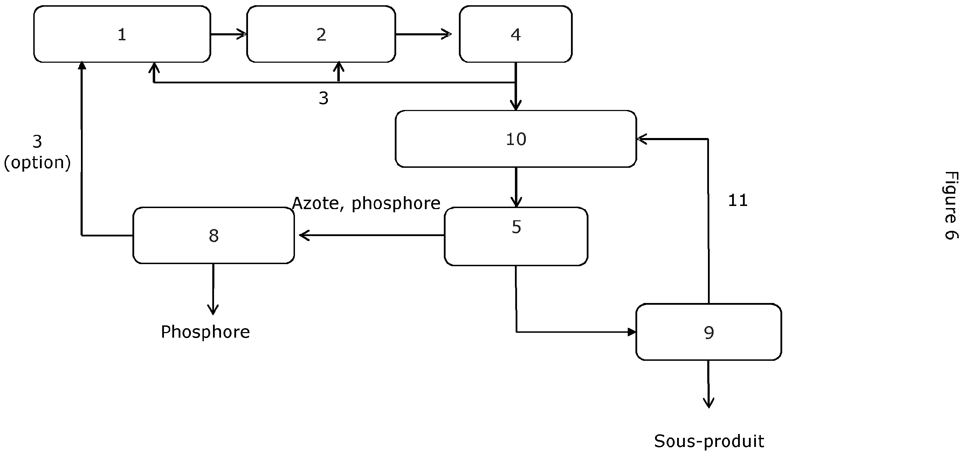

Dans une filière selon la présente invention, dont deux modes de réalisation sont illustrées aux Figures 5 et 6, les effluents issus du séparateur (4) ainsi que les effluents (11) provenant de l'unité de traitement avancé (9) alimentent le réacteur de relargage du phosphore (10).

Le réacteur (10) reçoit les effluents ayant séjournés précédemment dans le réacteur (2) lesquels comprennent des PAO qui vont utiliser les fortes concentrations en AGV présents dans les retours de traitement avancé (11) pour produire des PHA et relarguer le phosphore.

Cette quantité de phosphore issue du relargage va venir s'ajouter à la quantité de phosphore provenant des retours de traitement avancé (11).

L'effluent issu du réacteur (10) est soumis à une séparation liquide/solide (5), par exemple via un épaississeur. L'effluent liquide, chargé en phosphore, issu du séparateur (5) passe dans une unité de récupération du phosphore (8) ; la récupération du phosphore peut être réalisée par exemple par précipitation de struvite. L'azote présent dans les retours de traitement avancé (11) favorise également cette précipitation.

La majeure partie de l'effluent issue du séparateur (5) est ensuite traitée dans au moins une unité de traitement avancé (9) en présence ou en absence de digesteur anaérobie (7).

L'exemple ci-dessous permet de comparer le traitement selon l'invention avec les traitements conventionnels.

### EXEMPLE :

Le tableau 1 ci-dessous exprime les charges reçues par une station d'épuration des eaux usées pour un équivalent de 360 000 habitants.

**Tableau 1 - Charges reçues par la station d'épuration**

| | |
|---|---|
| Débit journalier | 100000 m³/j |
| Entrée STEP | |
| DCO | 140 g/EH |
| DBO5 | 60 g/EH |
| NTK | 14 g/EH |
| Pt | 2,5 g/EH |
| DCO | 50,4 t/j |
| DBO5 | 21,6 t/j |
| NTK | 5,0 t/j |
| Pt | 0,9 t/j |

| | |
|---|---|
| g/EH : grammes de pollution par équivalent d'habitants STEP : Station d'épuration DCO : Demande chimique en oxygène, représente la pollution carbonée DBO5 : Demande biochimique en oxygène NTK : Azote total Kjedhal, représente la pollution azotée Pt : Phosphate total, représente la pollution phosphorée t/j : tonnes/jour correspond à la multiplication des grammes de pollution par équivalent d'habitants par les m³/j | |

Dans le cas d'une récupération du phosphore sur les centrats de digestion (Figure 2), la quantité de phosphore dans les centrats est de l'ordre de 0,14 t/j (le débit de centrats est de l'ordre de 540 m³/j pour une concentration de 250 mg/L en phosphore). Le réacteur de récupération du phosphore permet une récupération de l'ordre de 0,12 tP/j, soit un rendement de 90%. Sur l'ensemble de la station d'épuration, cela fait un taux de récupération du phosphore de 14%.

Dans le cas d'une filière conventionnelle avec traitement thermique où la récupération du phosphore se fait sur les retours de traitement thermique des boues (Figure 4b), la quantité de phosphore récupérée est plus élevée grâce à la nouvelle dissolution du phosphore contenu dans les boues lors du traitement thermique et la concentration de phosphore est de l'ordre de 0,29 t/j.

La concentration en phosphore dans les retours de traitement thermique est de l'ordre de 2,6 g/L et le débit desdits retours est de l'ordre de 110 m³/j. Le rendement de récupération du phosphore sur l'ensemble de la station d'épuration est alors de 32 %.

Ce type de filière est purement théorique en raison des concentrations élevées en DCO (notamment AGV), en azote mais également en phosphore qui peuvent gêner la précipitation du phosphore dans la pratique. En outre, une dilution serait nécessaire ce qui n'est pas favorable économiquement.

Dans le cas des filières selon l'invention illustrées dans les Figures 5 et 6, où les retours de traitement thermique fournissent du phosphore, des AGV et de l'azote, tandis que les boues biologiques en excès relarguent le phosphore suraccumulé en présence d'AGV, la concentration en phosphore dans les retours de traitement thermiques est de l'ordre de 2,6 g/l pour un débit de 110 m³/j. La quantité de phosphore récupérée est de 0,45 t/j, le rendement de récupération du phosphore sur l'ensemble de la station d'épuration est alors de 41 %.

Ainsi le procédé selon l'invention permet d'atteindre de rendements de récupération de phosphore élevé même en l'absence d'une digestion anaérobie.

## Revendications

1. Procédé pour récupérer du phosphore présent dans un effluent à traiter comprenant les étapes suivantes :
i. une étape de déphosphatation biologique de l'effluent à traiter, ladite étape comprenant :
i.1. au moins une étape de traitement en conditions anaérobies, et
i.2. au moins une étape de traitement en conditions aérobies ;
ii. une étape de séparation dudit effluent traité issu de l'étape i, notamment pour séparer l'eau traitée issue de l'étape i et les boues ;
iii. une étape d'hydrolyse anaérobie d'au moins une partie des boues issues de l'étape ii dans laquelle le phosphore est relargué;
iv. une étape de séparation liquide/solide des effluents issus de l'étape iii ;
v. une étape de traitement avancé d'au moins une partie des boues issues de l'étape iv, ledit traitement avancé étant choisi parmi les traitements thermiques, mécaniques, chimiques, enzymatiques ou une combinaison de ceux-ci ;
vi. une étape de recirculation au niveau de l'étape iii d'au moins une partie de l'effluent liquide issu de l'étape v correspondant au retour de l'effluent liquide issu de l'étape v au niveau de l'étape iii tandis que l'effluent solide reste au niveau du traitement avancé, ce dernier permettant le passage en phase liquide de fortes concentrations d'azote, de phosphore et d'AGV et
vii. une étape de récupération du phosphore présent dans l'effluent liquide issu de l'étape iv.

2. Procédé selon la revendication 1 **caractérisé en ce que** l'étape de traitement avancé est une étape de traitement thermique choisi parmi le conditionnement thermique, la digestion anaérobie, l'oxydation en voie humide sous O₂ et sous pression, l'incinération dédiée avec ou sans préséchage, la pyrolyse, la thermolyse, la gazéification, l'ozonation ou l'ajout d'oxydant puissant comme le peroxyde d'hydrogène, le post-traitement des cendres par fusion, la gazéification avec vitrification intégrée, ou une combinaison de ces différents types de procédés.

3. Procédé selon la revendication 1 **caractérisé en ce que** l'étape de traitement avancé est une étape de traitement thermique choisi parmi une hydrolyse thermique, une carbonisation hydrothermale ou une oxydation par voie humide.

4. Procédé selon l'une quelconque des revendications précédentes, **caractérisé en ce qu'**il comprend en outre une étape de digestion anaérobie entre les étapes iv et v.

5. Procédé selon la revendication 4 **caractérisé en ce qu'**il comprend en outre une étape de valorisation de biogaz après l'étape de digestion anaérobie.

6. Procédé selon l'une quelconque des revendications précédentes **caractérisé en ce que** le liquide issu de l'étape vii est recirculé au niveau de l'étape i.

7. Procédé selon l'une quelconque des revendications précédentes **caractérisé en ce que** les effluents provenant du traitement avancé des boues v sont soumis à une étape de récupération ou d'élimination de l'azote.

8. Procédé selon l'une quelconque des revendications précédentes **caractérisé en ce que** le temps de séjour de l'effluent issu de l'étape ii est inférieur à 4h, de préférence compris entre 30min et 4h, de manière plus préférée compris entre 30min et 2h.

9. Procédé selon l'une quelconque des revendications précédentes **caractérisé en ce que** la récupération du phosphore se fait par précipitation par ajout d'ion soit de magnésium pour obtenir de la struvite, soit de calcium.

10. Procédé selon l'une quelconque des revendications précédentes **caractérisé en ce que** le taux de récupération du phosphore est supérieur à environ 30% du phosphore total entrant, de préférence supérieur à environ 40% du phosphore total entrant.

11. Installation pour récupérer du phosphore présent dans un effluent à traiter **caractérisée en ce qu'**elle comprend :
- au moins un réacteur anaérobie (1),
- au moins un réacteur aérobie (2),
- un séparateur (4), dans lequel l'effluent issu du réacteur aérobie (2) est séparé en eau traitée et boues,
- au moins un réacteur de relargage du phosphore (10), dans lequel sont traités par hydrolyse anaérobie les boues issues de la séparation par le séparateur (4),
- au moins un autre séparateur (5), dans lequel les boues issues du réacteur de relargage de phosphore (10) sont soumises à une séparation liquide/solide,
- au moins une unité de récupération du phosphore (8) dans laquelle passe l'effluent liquide issu dudit séparateur (5),
- au moins une unité de traitement avancé (9) pour traiter au moins une partie des boues issues du séparateur (5), ladite unité de traitement avancé (9) étant choisie parmi les unités de traitement thermique, mécanique, chimique, enzymatique ou une combinaison de celles-ci, et
- au moins un moyen de communication (11) entre l'au moins une unité de traitement avancé (9) et le réacteur de relargage du phosphore (10) permettant la recirculation d'au moins une partie de l'effluent liquide issu de l'unité de traitement avancé (9) vers le réacteur de relargage du phosphore (10) tandis que l'effluent solide reste au niveau de l'unité de traitement avancé (9) qui permet le passage en phase liquide de fortes concentrations d'azote, de phosphore et d'AGV..

12. Installation selon la revendication 11 **caractérisée en ce qu'**elle comprend en outre au moins un moyen de communication (3) entre l'au moins une unité de récupération du phosphore (8) et l'au moins un réacteur anaérobie (1) et/ou l'au moins un réacteur aérobie (2).

13. Installation selon la revendication 11 ou 12 **caractérisée en ce qu'**elle comprend en outre un digesteur anaérobie (7).

14. Installation selon l'une quelconque des revendications 11 à 13 **caractérisée en ce qu'**elle est couplée avec une installation pour la valorisation de biogaz.

## Patentansprüche

1. Verfahren zur Rückgewinnung von Phosphor aus einem zu behandelnden Abwasser, wobei das Verfahren die folgenden Schritte umfasst:
i. einen Schritt zur biologischen Phosphorelimination aus dem zu behandelnden Abwasser, wobei dieser Schritt folgendes umfasst:
i.1. wenigstens einen Behandlungsschritt unter anaeroben Bedingungen, und
i.2. wenigstens einen Behandlungsschritt unter aeroben Bedingungen;
ii. einen Schritt zur Trennung des behandelten Abwassers aus Schritt i, insbesondere zur Trennung des behandelten Wassers aus Schritt i und des Schlamms;
iii. einen Schritt zur anaeroben Hydrolyse von wenigstens einem Teil des Schlamms aus Schritt ii, in dem der Phosphor abgeschieden wird;
iv. einen Schritt zur Flüssig-/Fest-Trennung der Abwässer aus Schritt iii;
v. einen Schritt zur Weiterbehandlung von wenigstens einem Teil des Schlamms aus Schritt iv, wobei die Weiterbehandlung unter einer thermischen, mechanischen, chemischen, enzymatischen Behandlung oder einer Kombination davon ausgewählt wird;
vi. einen Schritt zur Rückführung in den Schritt iii von wenigstens einem Teil des flüssigen Abwassers aus Schritt v, der der Rückkehr des flüssigen Abwassers aus Schritt v in den Schritt iii entspricht, während der Feststoffabgang im Bereich der Weiterbehandlung verbleibt, wobei letztere den Übergang in die flüssige Phase von hohen Konzentrationen an Stickstoff, Phosphor und VFA ermöglicht, und
vii. einen Schritt zur Rückgewinnung des in dem flüssigen Abwasser aus Schritt iv enthaltenen Phosphors.

2. Verfahren nach Anspruch 1, **dadurch gekennzeichnet, dass** der Schritt der Weiterbehandlung ein Schritt einer thermischen Behandlung ist, wobei diese unter einer Behandlung durch thermische Konditionierung, anaerobe Vergärung, Nassoxidation unter O₂ und Druck, Spezialverbrennung mit oder ohne Vortrocknung, Pyrolyse, Thermolyse, Vergasung, Ozonierung oder Zugabe eines starken Oxidationsmittels wie Wasserstoffperoxid, Nachbehandlung der Asche durch Schmelzen, Vergasung mit integrierter Verglasung oder einer Kombination dieser verschiedenen Verfahrenstypen ausgewählt wird.

3. Verfahren nach Anspruch 1, **dadurch gekennzeichnet, dass** der Schritt der Weiterbehandlung ein Schritt einer thermischen Behandlung ist, wobei diese unter einer Behandlung durch thermische Hydrolyse, hydrothermale Karbonisierung oder Nassoxidation ausgewählt wird.

4. Verfahren nach einem der vorhergehenden Ansprüche, **dadurch gekennzeichnet, dass** es des Weiteren zwischen den Schritten iv und v einen Schritt zur anaeroben Vergärung umfasst.

5. Verfahren nach Anspruch 4, **dadurch gekennzeichnet, dass** es des Weiteren einen Schritt zur Verwertung von Biogas nach dem Schritt der anaeroben Vergärung umfasst.

6. Verfahren nach einem der vorhergehenden Ansprüche, **dadurch gekennzeichnet, dass** die Flüssigkeit aus Schritt vii in Schritt i zurückgeführt wird.

7. Verfahren nach einem der vorhergehenden Ansprüche, **dadurch gekennzeichnet, dass** die Abwässer aus der Weiterbehandlung des Schlamms v einem Schritt zur Rückgewinnung oder Entfernung von Stickstoff unterzogen werden.

8. Verfahren nach einem der vorhergehenden Ansprüche, **dadurch gekennzeichnet, dass** die Verweilzeit des Abwassers aus Schritt ii weniger als 4h, bevorzugt zwischen 30min und 4h, besonders bevorzugt zwischen 30min und 2h beträgt.

9. Verfahren nach einem der vorhergehenden Ansprüche, **dadurch gekennzeichnet, dass** die Rückgewinnung des Phosphors durch Ausfällung unter Zugabe von Magnesiumionen zur Gewinnung von Struvit oder unter Zugabe von Calciumionen erfolgt.

10. Verfahren nach einem der vorhergehenden Ansprüche, **dadurch gekennzeichnet, dass** die Phosphorrückgewinnungsrate mehr als etwa 30% des gesamten eingehenden Phosphors, bevorzugt mehr als etwa 40% des gesamten eingehenden Phosphors beträgt.

11. Anlage zur Rückgewinnung von Phosphor aus einem zu behandelnden Abwasser, wobei die Anlage folgendes umfasst:
- wenigstens einen anaeroben Reaktor (1),
- wenigstens einen aeroben Reaktor (2),
- einen Abscheider (4), in dem das Abwasser aus dem aeroben Reaktor (2) in behandeltes Wasser und Schlamm aufgetrennt wird,
- wenigstens einen Reaktor zur Anreicherung von Phosphor (10), in dem der Schlamm aus der Trennung durch den Abscheider (4) durch anaerobe Hydrolyse behandelt wird,
- wenigstens einen weiteren Abscheider (5), in dem der Schlamm aus dem Reaktor zur Anreicherung von Phosphor (10) einer Flüssig-/Fest-Trennung unterzogen wird,
- wenigstens eine Einheit zur Rückgewinnung von Phosphor (8), durch die das flüssige Abwasser aus dem Abscheider (5) strömt,
- wenigstens eine Einheit zur Weiterbehandlung (9) zur Behandlung von wenigstens einem Teil des Schlamms aus dem Abscheider (5), wobei die Einheit zur Weiterbehandlung (9) unter einer Einheit zur thermischen, mechanischen, chemischen, enzymatischen Behandlung oder einer Kombination davon ausgewählt wird, und
- wenigstens ein Fördermittel (11) zwischen der wenigstens einen Einheit zur Weiterbehandlung (9) und dem Reaktor zur Anreicherung von Phosphor (10), welches die Rückführung von wenigstens einem Teil des flüssigen Abwassers aus der Einheit zur Weiterbehandlung (9) zu dem Reaktor zur Anreicherung von Phosphor (10) ermöglicht, während der Feststoffabgang in der Einheit zur Weiterbehandlung verbleibt (9), wobei diese den Übergang in die flüssige Phase von hohen Konzentrationen an Stickstoff, Phosphor und VFA ermöglicht.

12. Anlage nach Anspruch 11, **dadurch gekennzeichnet, dass** sie des Weiteren wenigstens ein Fördermittel (3) zwischen der wenigstens einen Einheit zur Rückgewinnung von Phosphor (8) und dem wenigstens einen anaeroben Reaktor (1) und/oder dem wenigstens einen aeroben Reaktor (2) umfasst.

13. Anlage nach Anspruch 11, **dadurch gekennzeichnet, dass** sie des Weiteren einen anaeroben Fermenter (7) umfasst.

14. Anlage nach einem der Ansprüche 11 bis 13, **dadurch gekennzeichnet, dass** sie mit einer Anlage zur Verwertung von Biogas gekoppelt ist.

## Claims

1. A process for recovering the phosphorus present in an effluent to be treated, comprising the following steps:
i. a step of biological dephosphatation of the effluent to be treated, said step comprising:
i.1. at least one step of treatment under anaerobic conditions, and
i.2. at least one step of treatment under aerobic conditions;
ii. a step of separating said treated effluent from step i, in particular for separating the treated water issued from step i and the sludge;
iii. a step of anaerobic hydrolysis of at least one portion of the sludge issued from step ii in which phosphorous is released ;
iv. a step of liquid/solid separation of the effluent from step iii;
v. a step of advanced treatment of at least one portion of the sludge from step iv; said advanced treatment being chosen among the heat, mechanical, chemical, enzymatic treatments or a combination thereof ;
vi. a step of recirculating, to step iii, at least one portion of the liquid effluent issued from step v corresponding to the return of the liquid effluent from step v to step iii while the solid effluent remains at the advanced treatment, the later allowing the passage into the liquid phase of high concentrations of nitrogen, phosphorus and VFAs ; and
vii. a step of recovering the phosphorus present in the liquid effluent from step iv.

2. The process as claimed in claim 1, **characterized in that** a step of advanced treatment is a step of heat treatment chosen among heat conditioning, anaerobic digestion, wet oxidation under O₂ and under pressure, dedicated incineration with or without predrying, pyrolysis, thermolysis, gasification, ozonation or the addition of a powerful oxidizing agent such as hydrogen peroxide, post-treatment of ashes by melting, gasification with integrated vitrification, or a combination of these various types of processes.

3. The process as claimed in claim 1, **characterized in that** the advanced treatment step is heat treatment step chosen among thermal hydrolysis, hydrothermal carbonization or wet oxidation.

4. The process as claimed in any one of the preceding claims, **characterized in that** it also comprises an anaerobic digestion, step between steps iv and v.

5. The process as claimed in claim 4, **characterized in that** it also comprises a biogas exploitation step after the anaerobic digestion step.

6. The process as claimed in any one of the preceding claims, **characterized in that** the liquid from step vii is recirculated to step i.

7. The process as claimed in any one of the preceding claims, **characterized in that** the effluents issuing from the advanced treatment of the sludge v are subjected to a nitrogen recovering or eliminating step.

8. The process as claimed in any one of the preceding claims, **characterized in that** the residence time of the effluent from step ii is less than 4 h, preferably between 30 min and 4 h, more preferably between 30 min and 2 h.

9. The process as claimed in any one of the preceding claims, **characterized in that** the recovery of the phosphorus is carried out by precipitation by adding ion such as magnesium so as to obtain struvite, or such as calcium.

10. The process as claimed in any one of the preceding claims, **characterized in that** the degree of phosphorus recovery is greater than approximately 30% of the total phosphorus entering, preferably greater than approximately 40% of the total phosphorus entering.

11. A facility for recovering the phosphorus present in an effluent to be treated, **characterized in that** it comprises :
at least one anaerobic reactor (1),
at least one aerobic reactor (2),
a separator (4), in which the effluent issued from the aerobic reactor (2) is separated in treated water and sludge,
at least one phosphorus release reactor (10) in which are treated by anaerobic hydrolysis the sludge issued from the separation by the separator (4),
at least an other separator (5), in which the sludge issued from the phosphorus release reactor (10) are subjected to liquid/solid separation,
at least one phosphorus recovery unit (8) in which flows the liquid effluent issued from the separator (5),
at least one advanced treatment unit (9) for treating at least one portion of the sludge from the separator (5), said advanced treatment unit (9) being chosen among the heat, mechanical, chemical, enzymatic treatment units or a combination thereof and
at least one means for communication (11) between the at least one advanced treatment unit (9) and the phosphorus release reactor (10), allowing the return of at least a part of the liquid effluent from the advanced treatment unit (9) to the phosphorus release reactor (10) while the solid effluent remains at the advanced treatment unit (9) allowing the passage into the liquid phase of high concentrations of nitrogen, phosphorus and VFA.

12. The facility as claimed in claim 11, **characterized in that** it also comprises at least one means for communication (3) between the at least one phosphorus recovery unit (8) and the at least one anaerobic reactor (1) and/or the at least one aerobic reactor (2).

13. The facility as claimed in claim 11 or 12, **characterized in that** it also comprises an anaerobic digester (7).

14. The facility as claimed in any one of claims 11 to 13, **characterized in that** it is coupled with a facility for biogas exploitation.
